# FASCICULE DE BREVET EUROPEEN

(11) **EP 3 259 512 B1**
(45) Date de publication et mention de la délivrance du brevet: **05.06.2019**
(21) Numéro de dépôt: 16714956.6
(22) Date de dépôt: 12.02.2016
(51) Int. Cl.: F16L 1/11

(54) **CANALISATION ÉQUIPÉE D'UN ÉLÉMENT DE DÉTECTION**
ROHR MIT EINEM DETEKTIONSELEMENT
PIPE PROVIDED WITH A DETECTION ELEMENT

(30) Priorité: 20.02.2015 FR 1551466
(43) Date de publication de la demande: 27.12.2017
(73) Titulaire: Société Plymouth Française, 69320 Feyzin (FR); Plyvaplast S.à.r.l., 4485 Soleuvre (LU)
(72) Inventeur: MICHELIS, Patric, 4970 Bettange-Sur-Mess (LU); SAAD, Mounir, 69006 LYON (FR)
(74) Mandataire: Verriest, Philippe
(86) Numéro de dépôt international: PCT/FR2016/050334
(87) Numéro de publication internationale: WO 2016/132053

(56) Documents cités:
- EP-A2- 0 279 344
- FR-A1- 2 776 135
- GB-A- 1 213 727
- GB-A- 2 066 408
- US-A- 3 543 803

## Description

La présente invention concerne une canalisation équipée d'un élément de détection, un procédé de fabrication d'une telle canalisation et un procédé de détection d'une telle canalisation. Une telle canalisation est par exemple connu du document GB1213727.

Il importe, pour un gain de temps et de coûts mais aussi de sécurité, de pouvoir détecter la présence d'une canalisation, et notamment une canalisation d'écoulement de fluide, et de la localiser avec précision, sans creuser le sol, ni détruire des ouvrages, à l'occasion de travaux ultérieurs.

Plusieurs procédés peuvent être utilisés pour réaliser la détection de canalisations enterrées.

La détection par voie électromagnétique est la méthode la plus utilisée. Cette détection électromagnétique peut être effectuée à l'aide d'un détecteur électromagnétique comprenant de façon connue un émetteur, tel qu'un générateur de courant, et un récepteur. Dans ce cas, la détection électromagnétique est réalisée d'une part en injectant, à l'aide de l'émetteur du détecteur électromagnétique, un signal électrique, qui produit un champ électromagnétique, dans un élément de détection électriquement conducteur associé à la canalisation à identifier et disposé suivant le tracé de cette dernière, et ce via des boîtiers de connexion installés le long de la canalisation pour servir de points d'injection du signal électrique, et d'autre part en captant, à l'aide du récepteur du détecteur électromagnétique, le champ électromagnétique créé par le courant alternatif circulant dans l'élément de détection.

De façon connue en soi, l'élément de détection est recouvert par une gaine cylindrique en matériau électriquement isolant, et est fixé sur la canalisation à identifier à l'aide de moyens de fixation, tels que par exemple des circlips, des bandes auto-agrippantes, ou des bandes adhésives.

De tels moyens de fixation autorisent, pour la plupart, un déplacement de l'élément de détection sur la surface extérieure de la canalisation à identifier, et ce en particulier lorsque la canalisation est de section circulaire. Ces mouvements de l'élément de détection peuvent conduire à un positionnement imprécis de l'élément de détection, et donc à une détection imprécise et malaisée de la canalisation associée.

Or, compte tenu de l'évolution drastique des normes de précision en matière de détection de canalisations enterrées, il est nécessaire d'assurer un positionnement optimal de l'élément de détection, y compris après enfouissement de la canalisation associée.

La présente invention vise à remédier à ces inconvénients.

Le problème technique à la base de l'invention consiste donc à fournir une canalisation qui soit de structure simple et économique, tout en assurant un positionnement aisé et optimal de l'élément de détection et donc une détection aisée de la canalisation.

A cet effet, la présente invention concerne une canalisation destinée à être enterrée, comprenant :
- un élément tubulaire délimitant un passage interne longitudinal,
- une bande de protection s'étendant longitudinalement par rapport à l'élément tubulaire, la bande de protection comprenant deux portions latérales longitudinales fixées sur la surface extérieure de l'élément tubulaire, la bande de protection et l'élément tubulaire délimitant un passage de réception longitudinal, et
- un élément de détection destiné à être détecté avec un dispositif de détection, l'élément de détection étant linéaire et comprenant une âme électriquement conductrice et une gaine électriquement isolante recouvrant l'âme électriquement conductrice, l'élément de détection s'étendant longitudinalement dans le passage de réception et étant monté mobile longitudinalement par rapport à l'élément tubulaire et à la bande de protection, les deux portions latérales longitudinales de la bande de protection s'étendant de part et d'autre de l'élément de détection.

Une telle configuration de la canalisation, et plus particulièrement la disposition de l'élément de détection dans le passage de réception longitudinal délimité partiellement par l'élément tubulaire, assure un positionnement final optimal et stable de l'élément de détection le long de la génératrice supérieure de la canalisation associée, y compris après enfouissement de la canalisation associée.

Ainsi, la configuration de la canalisation selon la présente invention assure une détection par voie électromagnétique aisée et précise de la canalisation.

En outre, le fait que l'élément de détection soit monté mobile longitudinalement dans le passage de réception permet d'éviter une rupture, et notamment un déchirement, de la bande de protection lorsque la canalisation est enroulée sur une couronne ou un touret. De ce fait, la configuration de la canalisation selon la présente invention permet de maintenir l'élément de détection en place pendant le déroulement et la pose de la canalisation dans une tranchée destinée à accueillir cette dernière.

De plus, un tel montage de l'élément de détection permet d'accéder aisément à une portion d'extrémité de l'élément de détection en déchirant une portion d'extrémité de la bande de protection à l'aide par exemple d'un simple outil, tel qu'un tournevis ou similaire, en vue du raccordement de l'élément de détection à un élément de détection d'une canalisation adjacente, ou à un élément de connexion d'une borne de détection.

La configuration de la canalisation selon la présente invention, et en particulier le fait qu'elle soit pré-équipée de l'élément de détection, permet d'une part d'en réduire les coûts et le temps de pose, et d'autre part d'en faciliter la pose notamment dans une tranchée étroite, et également à l'aide d'une trancheuse. Ces dispositions permettent en outre d'assurer une pose aisée de la canalisation en fonçage et en forage dirigé.

On entend dans la présente demande de brevet par canalisation tout tuyau, tube et gaine destiné au transport à distance ou à la distribution d'un liquide, d'un gaz, de l'électricité, ou de la lumière, ou gaine vide posée en attente d'utilisation ultérieure.

Selon un mode de réalisation de l'invention, le passage interne longitudinal est destiné à l'écoulement d'un fluide, ou au passage d'au moins une fibre optique et/ou d'au moins un câble électrique.

Selon un mode de réalisation de l'invention, l'élément tubulaire est flexible.

La canalisation peut en outre présenter une ou plusieurs des caractéristiques suivantes, prises seules ou en combinaison.

Selon un mode de réalisation de l'invention, l'élément de détection s'étend le long de la génératrice supérieure de l'élément tubulaire.

Selon un mode de réalisation de l'invention, le passage de réception longitudinal s'étend sur sensiblement toute la longueur de l'élément tubulaire.

Selon un mode de réalisation de l'invention, le passage de réception longitudinal comporte une première et une deuxième ouvertures de passage disposées respectivement sensiblement au niveau des première et deuxième extrémités de l'élément tubulaire.

Selon un mode de réalisation de l'invention, l'élément de détection présente une section transversale inférieure à la section transversale du passage de réception.

Selon un mode de réalisation de l'invention, les deux portions latérales longitudinales de la bande de protection sont chacune fixées sur la surface extérieure de l'élément tubulaire par soudure aux ultrasons.

Selon un mode de réalisation de l'invention, la bande de protection est en matière synthétique, et par exemple en matière polymère. La bande de protection pourrait être en matériau synthétique non-tissé comprenant des fibres de polyéthylène, telles que des fibres polyéthylène haute densité, et par exemple en Tyvek (marque déposée). La bande de protection pourrait également être en polypropylène.

Selon un mode de réalisation de l'invention, l'élément de détection est un fil électriquement conducteur.

Selon un mode de réalisation de l'invention, l'élément tubulaire comporte une paroi tubulaire délimitant le passage interne longitudinal, les deux portions latérales de la bande de protection étant fixées sur la surface extérieure de la paroi tubulaire. La paroi tubulaire de l'élément tubulaire peut par exemple être annelée ou présenter une surface extérieure lisse.

Selon un mode de réalisation de l'invention, la gaine électriquement isolante est en polyéthylène ou en polypropylène.

Selon un mode de réalisation de l'invention, l'élément de détection présente une section rectangulaire, ovale ou circulaire.

Selon un mode de réalisation de l'invention, l'élément tubulaire est en polyéthylène.

La présente invention concerne en outre une installation comprenant :
- au moins une canalisation selon l'invention, et
- au moins un boîtier de connexion comportant au moins un élément de connexion connecté électriquement à l'élément de détection de l'au moins une canalisation.

Selon un mode de réalisation de l'invention, l'installation comporte au moins une borne de détection comportant l'au moins un boîtier de connexion. La borne de détection peut par exemple être conforme à celles décrites dans les documents FR2982889, FR3006061 et FR2997195. La borne de détection peut par exemple être une bouche à clé.

Selon un mode de réalisation de l'invention, la borne de détection comporte une portion électriquement conductrice connectée électriquement à l'élément de connexion et accessible depuis l'extérieur d'un ouvrage sur lequel est fixée la borne de détection. Par ouvrage, on entend notamment un trottoir, une chaussée, un mur, une trappe d'accès à une galerie technique, un tampon ou encore un regard.

Selon un mode de réalisation de l'invention, la canalisation est une canalisation d'écoulement de fluide ou une canalisation de protection pour fibre optique et/ou câble électrique, ou encore pour conduit d'écoulement de fluide.

La présente invention concerne également un procédé de fabrication d'une canalisation selon l'invention, comprenant les étapes consistant à :
- extruder l'élément tubulaire,
- déposer l'élément de détection longitudinalement sur la surface extérieure de l'élément tubulaire,
- déposer la bande de protection longitudinalement sur la surface extérieure de l'élément tubulaire de manière à recouvrir l'élément de détection, et
- fixer les portions latérales longitudinales de la bande de protection sur la surface extérieure de l'élément tubulaire de manière à former le passage de réception longitudinal.

Selon un mode de mise en oeuvre du procédé de fabrication, ce dernier comprend une étape de refroidissement de l'élément tubulaire réalisée entre l'étape d'extrusion de l'élément tubulaire et l'étape de dépôt de l'élément de détection.

Selon un mode de mise en oeuvre du procédé de fabrication, l'étape de dépôt de la bande de protection est réalisée en continu.

Selon un mode de mise en oeuvre du procédé de fabrication, l'étape de fixation de la bande de protection est réalisée en continu.

Selon un mode de mise en oeuvre du procédé de fabrication, l'étape de fixation de la bande de protection est réalisée en fin de cycle de fabrication de l'élément tubulaire. Avantageusement, les étapes de dépôt sont également réalisées en fin de cycle de fabrication de l'élément tubulaire.

Selon un mode de mise en oeuvre du procédé de fabrication, l'étape de dépôt de l'élément de détection comprend une étape consistant à dérouler l'élément de détection à partir d'une bobine d'élément de détection.

Selon un mode de mise en oeuvre du procédé de fabrication, l'étape dépôt de la bande de protection comprend une étape consistant à dérouler la bande de protection à partir d'une bobine de bande de protection.

Selon un mode de mise en oeuvre du procédé de fabrication, l'étape dépôt de la bande de protection consiste à déposer les portions latérales longitudinales de la bande de protection de part et d'autre de l'élément de détection.

Selon un mode de mise en oeuvre du procédé de fabrication, ce dernier comprend une étape consistant à déplacer longitudinalement l'élément tubulaire, c'est-à-dire parallèlement à sa direction d'extension, et par exemple selon sa direction d'extrusion, lors des étapes de dépôt de l'élément de détection et de la bande de protection et lors de l'étape de fixation de la bande de protection.

Selon un mode de mise en oeuvre du procédé de fabrication, l'étape de fixation consiste à fixer les portions latérales longitudinales de la bande de protection sur la surface extérieure de l'élément tubulaire par soudure aux ultrasons.

Selon un mode de mise en oeuvre du procédé de fabrication, l'étape de fixation est réalisée à l'aide d'une sonotrode.

Selon un mode de mise en oeuvre du procédé de fabrication, la sonotrode présente une fréquence de résonance comprise entre 20 kHz et 70 kHz, et par exemple de 20, 30, 35, 40 ou 70 kHz.

Selon un mode de mise en oeuvre du procédé de fabrication, la sonotrode présente une amplitude de vibration comprise entre 10 et 120 micromètres.

La présente invention concerne de plus un procédé de détection d'une canalisation enterrée selon l'invention, comprenant les étapes consistant à :
- injecter un signal électrique dans l'élément de détection,
- détecter le champ électromagnétique généré par l'élément de détection.

L'étape d'injection est avantageusement réalisée à l'aide d'un générateur de signal électrique, tel qu'un générateur de courant. Selon un mode de mise en oeuvre du procédé de détection, l'étape d'injection comprend une étape consistant à relier électriquement le générateur de signal électrique à l'élément de détection, et par exemple à relier électriquement le générateur de signal électrique à une portion électriquement conductrice d'une borne de détection, ladite portion électriquement conductrice étant connectée électriquement à l'élément de détection et étant accessible depuis l'extérieur d'un ouvrage sur lequel est fixée la borne de détection.

L'étape de détection est avantageusement réalisée à l'aide d'un détecteur électromagnétique.

De toute façon l'invention sera bien comprise à l'aide de la description qui suit en référence au dessin schématique annexé représentant, à titre d'exemple non limitatif, une forme d'exécution de cette canalisation.
Figure 1 est une vue partielle en perspective d'une canalisation selon l'invention.
Figure 2 est une vue en coupe transversale de la canalisation de la figure 1.

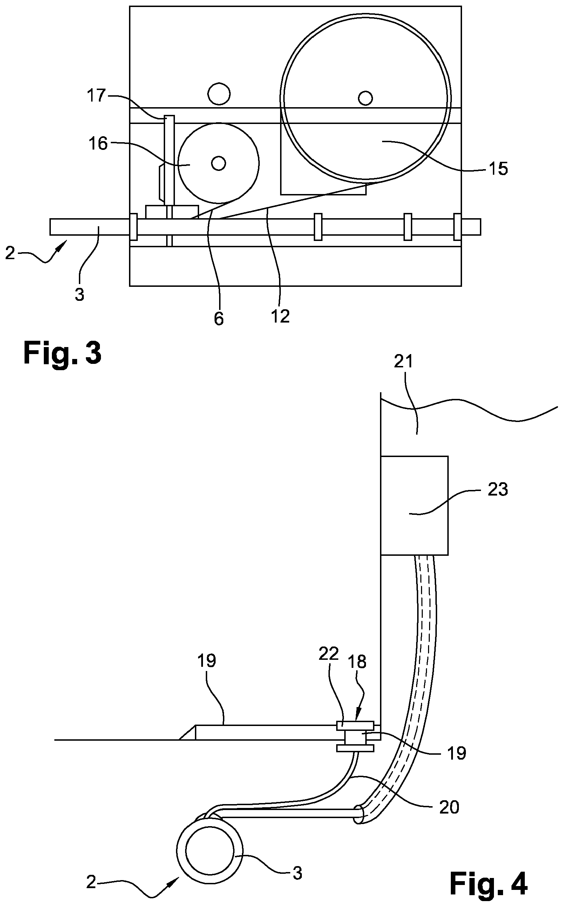

Figure 3 est une vue schématique de la canalisation de la figure 1 en cours de fabrication.
Figure 4 est une vue schématique d'une installation comprenant une canalisation selon la figure 1 et une borne de détection.

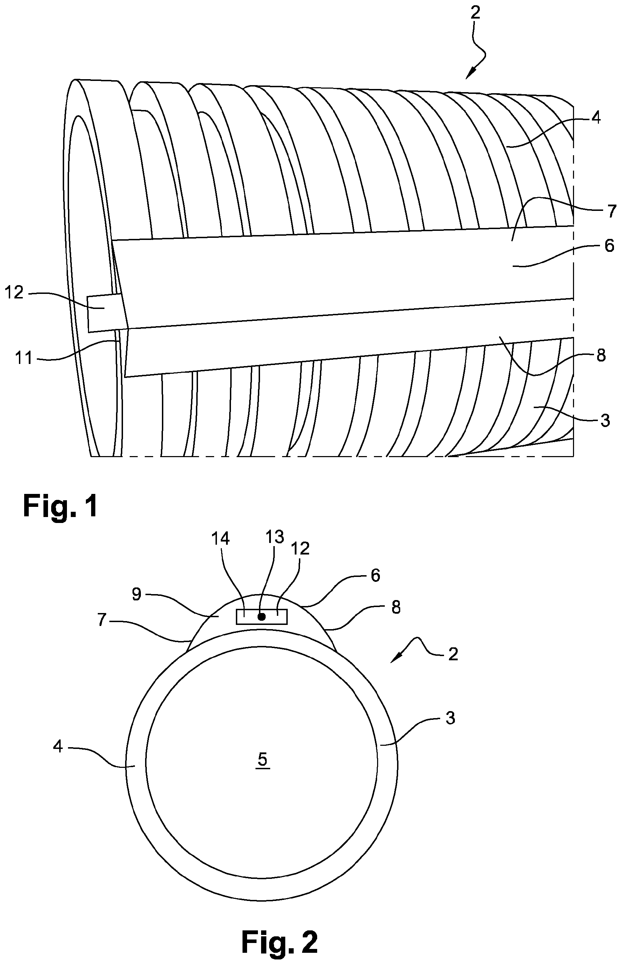

Les figures 1 et 2 représentent une canalisation 2 destinée à être enterrée. La canalisation 2 peut par exemple être une canalisation d'écoulement de fluide ou encore une canalisation de protection pour fibre optique et/ou de câble électrique.

La canalisation 2 comprend un élément tubulaire 3 comportant une paroi tubulaire 4 délimitant un passage interne longitudinal 5 destiné par exemple à l'écoulement d'un fluide, tel qu'un gaz ou de l'eau, et par exemple de l'eau pluviale, de l'eau usée, de l'eau potable, ou destiné au passage d'au moins une fibre optique et/ou d'au moins un câble électrique. La paroi tubulaire 4 peut par exemple être annelée ou présenter une surface extérieure lisse. En outre, l'élément tubulaire 3 peut être réalisé par exemple en polyéthylène.

La canalisation 2 comprend en outre un élément de protection 6, réalisé sous la forme d'une bande de protection, fixé sur la surface extérieure de l'élément tubulaire 3. L'élément de protection 6 s'étend longitudinalement le long de la génératrice supérieure de l'élément tubulaire 3. L'élément de protection 6 comprend plus particulièrement deux portions latérales longitudinales 7, 8 fixées sur la surface extérieure de l'élément tubulaire 3 par soudure aux ultrasons. L'élément de protection 6 est avantageusement réalisé en matière synthétique, et plus particulièrement en matière polymère. L'élément de protection 6 peut être réalisé en un matériau synthétique non-tissé comprenant des fibres de polyéthylène, telles que des fibres polyéthylène haute densité, et par exemple en Tyvek (marque déposée). Cependant, l'élément de protection 6 pourrait également être réalisé en un autre matériau polymère, tel qu'en polypropylène. L'élément de protection 6 peut par exemple présenter une largeur comprise entre 3 et 4 cm.

L'élément de protection 6 et l'élément tubulaire 3 délimitent un passage de réception longitudinal 9 s'étendant sur toute la longueur de l'élément tubulaire 3. Le passage de réception longitudinal 9 comporte une première et une deuxième ouvertures de passage 11 disposées respectivement au niveau des première et deuxième extrémités de l'élément tubulaire 3.

La canalisation 2 comprend également un élément de détection 12, réalisé sous la forme d'un fil électriquement conducteur, adapté pour être détecté avec un dispositif de détection, tel qu'un détecteur électromagnétique. L'élément de détection 12 s'étend longitudinalement dans le passage de réception 9 et est monté mobile longitudinalement par rapport à l'élément tubulaire 3 et à l'élément de protection 6. Les deux portions latérales longitudinales 7, 8 de l'élément de protection 6 s'étendent avantageusement de part et d'autre de l'élément de détection 12. Selon un mode de réalisation de l'invention, l'élément de détection 12 présente une section transversale inférieure à la section transversale du passage de réception 9.

L'élément de détection 12 peut présenter une section rectangulaire, ovale ou encore circulaire. L'élément de détection 12 comprend avantageusement une âme électriquement conductrice 13 et une gaine électriquement isolante 14 recouvrant l'âme électriquement conductrice 13. L'âme électriquement conductrice 13 peut par exemple être réalisée en cuivre, en acier inoxydable ou en un autre métal, et la gaine électriquement isolante 14 peut par exemple être réalisée en polyéthylène ou en polypropylène.

Un procédé de fabrication d'une canalisation 2 selon l'invention va maintenant être décrit. Un tel procédé comprend les étapes suivantes consistant à :
- extruder l'élément tubulaire 3,
- refroidir l'élément tubulaire 3,
- déplacer longitudinalement l'élément tubulaire 3,
- déposer l'élément de détection 12 longitudinalement sur la surface extérieure de l'élément tubulaire 3,
- déposer l'élément de protection 6 longitudinalement sur la surface extérieure de l'élément tubulaire 3 de manière à recouvrir l'élément de détection 12 et de telle sorte que les portions latérales longitudinales 7, 8 de l'élément de protection 6 s'étendent de part et d'autre de l'élément de détection 12, et
- fixer les portions latérales longitudinales 7, 8 de l'élément de protection 6 sur la surface extérieure de l'élément tubulaire 3 par soudure aux ultrasons de manière à former le passage de réception longitudinal 9.

Selon un mode de mise en oeuvre du procédé de fabrication, les étapes de déplacement de l'élément tubulaire 3 et de dépôt de l'élément de détection 12 et de l'élément de protection 6 sont réalisées en continu.

Selon un mode de mise en oeuvre du procédé de fabrication, l'étape de fixation et les étapes de dépôt sont réalisées en fin de cycle de fabrication de l'élément tubulaire 3.

Selon un mode de mise en oeuvre du procédé de fabrication, l'étape de dépôt de l'élément de détection 12 comprend une étape consistant à dérouler l'élément de détection 12 à partir d'une bobine d'élément de détection 15, et l'étape dépôt de l'élément de protection 6 comprend une étape consistant à dérouler l'élément de protection à partir d'une bobine d'élément de protection 16.

Selon un mode de mise en oeuvre du procédé de fabrication, l'étape de fixation de l'élément de protection 6 est réalisée en continu.

Selon un mode de mise en oeuvre du procédé de fabrication, l'étape de fixation est réalisée à l'aide d'une sonotrode 17. La sonotrode 17 peut présenter une fréquence de résonance comprise entre 20 kHz et 70 kHz, et par exemple de 20, 30, 35, 40 ou 70 kHz, et une amplitude de vibration comprise entre 10 et 120 micromètres.

Selon un mode de mise en oeuvre du procédé de fabrication, la bobine d'élément de détection 15 et la bobine d'élément de protection 16 présentent des axes d'enroulement perpendiculaires à la direction de déplacement de l'élément tubulaire 3.

Un procédé de détection d'une canalisation 2 selon l'invention va maintenant être décrit. Un tel procédé comprend les étapes suivantes consistant à :
- prévoir une borne de détection 18 comprenant un boîtier de connexion 19 équipé d'au moins un élément de connexion,
- dénuder l'une des extrémités de l'élément de détection 12 appartenant à la canalisation 2,
- raccorder électriquement l'extrémité dénudée de l'élément de détection 12 à l'élément de connexion de la borne de détection 18, par exemple à l'aide d'une portion de câble électrique 20,
- fixer la borne de détection 18 sur un ouvrage, tel qu'un trottoir 24 ou un mur 21,
- raccorder électriquement un générateur de signal électrique, tel qu'un générateur de courant, à l'élément de connexion de la borne de détection 18,
- injecter un signal électrique dans l'élément de détection 12, via notamment l'élément de connexion, à l'aide du générateur de signal électrique, et
- détecter le champ électromagnétique généré par l'élément de détection 12 à l'aide d'un détecteur électromagnétique de manière à détecter et suivre la canalisation 2.

Selon un mode de mise en oeuvre du procédé de détection, la borne de détection 12 comprend une portion électriquement conductrice 22 connectée électriquement à l'élément de détection, et l'étape de fixation de la borne de détection 18 est réalisée de telle sorte que la portion électriquement conductrice 22 est accessible depuis l'extérieur de l'ouvrage.

Selon un mode de mise en oeuvre du procédé de détection, l'étape d'injection comprend une étape consistant à relier électriquement le générateur de signal électrique à la portion électriquement conductrice 22 de la borne de détection.

Selon un autre mode de mise en oeuvre du procédé de détection, l'étape de fixation consiste à fixer la borne de détection 18 à proximité d'un coffret de compteurs gaz 23, de compteurs d'eau ou tout autre affleurant.

Selon une variante de mise en oeuvre du procédé de détection, l'extrémité dénudée de l'élément de détection 12 pourrait être raccordée électriquement à un coffret placé dans un regard de visite, et le signal électrique pourrait alors être injecté dans l'élément de détection 12 via le coffret.

Selon encore une variante de mise en oeuvre du procédé de détection, l'extrémité dénudée de l'élément de détection 12 pourrait être laissée en instance, et le signal électrique pourrait alors être injecté directement dans l'élément de détection 12 à partir de son extrémité dénudée.

## Revendications

1. Canalisation (2) destinée à être enterrée, comprenant :
- un élément tubulaire (3) délimitant un passage interne longitudinal (5),
- une bande de protection (6) s'étendant longitudinalement par rapport à l'élément tubulaire (3), la bande de protection (6) comprenant deux portions latérales longitudinales (7, 8) fixées sur la surface extérieure de l'élément tubulaire (3), la bande de protection (6) et l'élément tubulaire (3) délimitant un passage de réception longitudinal (9), et
- un élément de détection (12) destiné à être détecté avec un dispositif de détection, l'élément de détection (12) étant linéaire et comprenant une âme électriquement conductrice (13) et une gaine électriquement isolante (14) recouvrant l'âme électriquement conductrice (13), l'élément de détection (12) s'étendant longitudinalement dans le passage de réception (9) et étant monté mobile longitudinalement par rapport à l'élément tubulaire (3) et à la bande de protection (6), les deux portions latérales longitudinales (7, 8) de la bande de protection (6) s'étendant de part et d'autre de l'élément de détection (12).

2. Canalisation selon la revendication 1, dans laquelle l'élément de détection (12) présente une section transversale inférieure à la section transversale du passage de réception (9).

3. Canalisation selon l'une des revendications 1 ou 2, dans laquelle les deux portions latérales longitudinales (7, 8) de la bande de protection (6) sont chacune fixées sur la surface extérieure de l'élément tubulaire (3) par soudure aux ultrasons.

4. Canalisation selon l'une quelconque des revendications 1 à 3, dans laquelle la bande de protection (6) est en matière synthétique, et par exemple en matière polymère.

5. Canalisation selon la revendication 4, dans laquelle la bande de protection (6) est en matériau synthétique non-tissé comprenant des fibres de polyéthylène, telles que des fibres polyéthylène haute densité.

6. Canalisation selon l'une quelconque des revendications 1 à 5, dans laquelle la bande de protection (6) est en Tyvek.

7. Installation comprenant :
- au moins une canalisation (2) selon l'une quelconque des revendications 1 à 6, et
- au moins un boîtier de connexion (19) comportant au moins un élément de connexion connecté électriquement à l'élément de détection (12) de l'au moins une canalisation (2).

8. Procédé de fabrication d'une canalisation (2) selon l'une quelconque des revendications 1 à 6, comprenant les étapes consistant à :
- extruder l'élément tubulaire (3),
- déposer l'élément de détection (12) longitudinalement sur la surface extérieure de l'élément tubulaire (3),
- déposer la bande de protection (6) longitudinalement sur la surface extérieure de l'élément tubulaire (3) de manière à recouvrir l'élément de détection (12), et
- fixer les deux portions latérales longitudinales (7, 8) de la bande de protection (6) sur la surface extérieure de l'élément tubulaire (3) de manière à former le passage de réception longitudinal (9).

9. Procédé de fabrication selon la revendication 8, dans lequel l'étape de fixation consiste à fixer les deux portions latérales longitudinales (7, 8) de la bande de protection (6) sur la surface extérieure de l'élément tubulaire (3) par soudure aux ultrasons.

10. Procédé de détection d'une canalisation (2) selon l'une quelconque des revendications 1 à 6, comprenant les étapes consistant à :
- injecter un signal électrique dans l'élément de détection (12),
- détecter le champ électromagnétique généré par l'élément de détection (12).

## Patentansprüche

1. Rohr (2), das dazu bestimmt ist, erdverlegt zu werden, umfassend:
- ein röhrenförmiges Element (3), das einen inneren Längsdurchgang (5) eingrenzt,
- ein Schutzband (6), das sich längs im Verhältnis zu dem röhrenförmigen Element (3) erstreckt, wobei das Schutzband (6) zwei seitliche Längsabschnitte (7, 8) umfasst, die auf der äußeren Oberfläche des röhrenförmigen Elements (3) befestigt sind, wobei das Schutzband (6) und das röhrenförmige Element (3) einen Längsaufnahmedurchgang (9) eingrenzen, und
- ein Detektionselement (12), das dazu bestimmt ist, mit einer Detektionsvorrichtung detektiert zu werden, wobei das Detektionselement (12) linear ist und einen elektrisch leitfähigen Kern (13) und eine elektrisch isolierende Hülle (14) umfasst, die den elektrisch leitfähigen Kern (13) bedeckt, wobei sich das Detektionselement (12) längs in dem Aufnahmedurchgang (9) erstreckt und im Verhältnis zu dem röhrenförmigen Element (3) und dem Schutzband (6) längs beweglich montiert ist, wobei sich die beiden seitlichen Längsabschnitte (7, 8) des Schutzbandes (6) beiderseits des Detektionselements (12) erstrecken.

2. Rohr nach Anspruch 1, wobei das Detektionselement (12) einen Querschnitt kleiner als der Querschnitt des Aufnahmedurchgangs (9) aufweist.

3. Rohr nach einem der Ansprüche 1 oder 2, wobei die beiden seitlichen Längsabschnitte (7, 8) des Schutzbandes (6) jeweils durch Ultraschallschweißen auf der äußeren Oberfläche des röhrenförmigen Elements (3) befestigt sind.

4. Rohr nach einem der Ansprüche 1 bis 3, wobei das Schutzband (6) aus synthetischem Material, und beispielsweise aus Polymermaterial ist.

5. Rohr nach Anspruch 4, wobei das Schutzband (6) aus synthetischem Vliesmaterial ist, das Fasern aus Polyethylen, wie hochdichte Polyethylen-Fasern, umfasst.

6. Rohr nach einem der Ansprüche 1 bis 5, wobei das Schutzband (6) aus Tyvek ist.

7. Installation, umfassend:
- mindestens ein Rohr (2) nach einem der Ansprüche 1 bis 6, und
- mindestens eine Anschlussdose (19), die mindestens ein Anschlusselement beinhaltet, das elektrisch an das Detektionselement (12) des mindestens einen Rohres (2) angeschlossen ist.

8. Verfahren zum Herstellen eines Rohres (2) nach einem der Ansprüche 1 bis 6, die Schritte umfassend, die darin bestehen:
- das röhrenförmige Element (3) zu extrudieren,
- das Detektionselement (12) längs auf der äußeren Oberfläche des röhrenförmigen Elements (3) aufzubringen,
- das Schutzband (6) längs auf der äußeren Oberfläche des röhrenförmigen Elements (3) aufzubringen, um das Detektionselement (12) zu überdecken, und
- die beiden seitlichen Längsabschnitte (7, 8) des Schutzbandes (6) auf der äußeren Oberfläche des röhrenförmigen Elements (3) zu befestigen, um den Längsaufnahmedurchgang (9) zu bilden.

9. Verfahren zum Herstellen nach Anspruch 8, wobei der Befestigungsschritt darin besteht, die beiden seitlichen Längsabschnitte (7, 8) des Schutzbandes (6) durch Ultraschallschweißen auf der äußeren Oberfläche des röhrenförmigen Elements (3) zu befestigen.

10. Verfahren zum Detektieren eines Rohres (2) nach einem der Ansprüche 1 bis 6, die Schritte umfassend, die darin bestehen:
- ein elektrisches Signal in das Detektionselement (12) zu injizieren,
- das elektromagnetische Feld, das durch das Detektionselement (12) erzeugt wird, zu detektieren.

## Claims

1. A piping (2) intended to be buried, comprising:
- a tubular member (3) delimiting a longitudinal inner passage (5),
- a protective strip (6) extending longitudinally relative to the tubular member (3), the protective strip (6) comprising two longitudinal lateral portions (7, 8) fastened on an outer surface of the tubular member (3), the protective strip (6) and the tubular member (3) delimiting a longitudinal receiving passage (9), and
- a sensing member (12) intended to be sensed with a sensing device, the sensing member (12) being linear and comprising an electrically conductive core (13) and an electrically insulating sheath (14) covering the electrically conductive core (13), the sensing member (12) extending longitudinally in the receiving passage (9) and being movably mounted longitudinally relative to the tubular member (3) and the protective strip (6), the two longitudinal lateral portions (7, 8) of the protective strip (6) extending on either side of the sensing member (12).

2. The piping according to claim 1, wherein the sensing member (12) has a cross-section smaller than a cross-section of the receiving passage (9).

3. The piping according to any of claims 1 or 2, wherein the two longitudinal lateral portions (7, 8) of the protective strip (6) are each fastened on the outer surface of the tubular member (3) by ultrasonic welding.

4. The piping according to any one of claims 1 to 3, wherein the protective strip (6) is made of a synthetic material, and for example of a polymeric material.

5. The piping according to claim 4, wherein the protective strip (6) is made of a non-woven synthetic material comprising polyethylene fibers, such as high-density polyethylene fibers.

6. The piping according to any one of claims 1 to 5, wherein the protective strip (6) is made of Tyvek.

7. An installation comprising:
- at least one piping (2) according to any one of claims 1 to 6, and
- at least one connection housing (19) including at least one connection member electrically connected to the sensing member (12) of the at least one piping (2).

8. A method for manufacturing a piping (2) according to any one of claims 1 to 6, comprising the steps consisting in:
- extruding the tubular member (3),
- laying the sensing member (12) longitudinally on the outer surface of the tubular member (3),
- laying the protective strip (6) longitudinally on the outer surface of the tubular member (3) so as to cover the sensing member (12), and
- fastening the two longitudinal lateral portions (7, 8) of the protective strip (6) on the outer surface of the tubular member (3) so as to form the longitudinal receiving passage (9).

9. The manufacturing method according to claim 8, wherein the fastening step consists in fastening the two longitudinal lateral portions (7,8) of the protective strip (6) on the outer surface of the tubular member (3) by ultrasonic welding.

10. A method for sensing a piping (2) according to any one of claims 1 to 6, comprising the steps consisting in:
- injecting an electrical signal into the sensing member (12),
- sensing the electromagnetic field generated by the sensing member (12).
